(19) Europäisches Patentamt
European Patent Office
Office européen des brevets

(11) EP 4 234 635 A1

(12) EUROPEAN PATENT APPLICATION
published in accordance with Art. 153(4) EPC

(43) Date of publication:
**30.08.2023 Bulletin 2023/35**

(21) Application number: **21882650.1**

(22) Date of filing: **12.10.2021**

(51) International Patent Classification (IPC):
***C09B 29/03*** (2006.01) ***C09B 29/30*** (2006.01)
***C09B 31/10*** (2006.01) ***C09B 31/147*** (2006.01)
***C09B 35/04*** (2006.01) ***C09D 11/02*** (2014.01)
***C09D 11/322*** (2014.01) ***B41M 5/00*** (2006.01)
***D06P 1/06*** (2006.01) ***C09B 67/20*** (2006.01)

(52) Cooperative Patent Classification (CPC):
**C09D 11/328; C09B 67/0033; C09B 67/0066; C09B 67/0083; D06P 1/06; D06P 5/30**

(86) International application number:
**PCT/JP2021/037655**

(87) International publication number:
**WO 2022/085509 (28.04.2022 Gazette 2022/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.10.2020 JP 2020177913**
**08.09.2021 JP 2021146491**

(71) Applicant: **Nippon Kayaku Kabushiki Kaisha**
**Tokyo 100-0005 (JP)**

(72) Inventors:
- **NAGATSUKA Yuka**
**Tokyo 115-8588 (JP)**
- **UMEDA Mariko**
**Tokyo 115-8588 (JP)**
- **AKANUMA Rima**
**Tokyo 115-8588 (JP)**

(74) Representative: **Maiwald GmbH**
**Elisenhof**
**Elisenstraße 3**
**80335 München (DE)**

# (54) COLORED LIQUID, COLORED-LIQUID SET, RECORDING MEDIUM, AND COLORING METHOD

(57) Provided is a colored liquid comprising: a colorant having a naphthalene skeleton in the molecule; a compound having two or more naphthalene skeletons in the molecule (which is neither the colorant having a naphthalene skeleton in the molecule nor a compound having a pyrazine skeleton in the molecule) and/or a compound having a pyrazine skeleton in the molecule (which is not the colorant having a naphthalene skeleton in the molecule); and water. Also provided are a colored-liquid set including the colored liquid, a recording medium on which the colored liquid or the colored liquids of the set have been deposited, and a coloring method in which the colored liquid or the colored-liquid set is used.

EP 4 234 635 A1

## Description

TECHNICAL FIELD

The present invention relates to a colored liquid, a colored liquid set including the colored liquid, a recording medium to which the colored liquid or each colored liquid included in the colored liquid set is attached, and a coloring method using the colored liquid or the colored liquid set.

BACKGROUND ART

Many dyes and pigments have been developed so far, some of which have color index numbers assigned and are commercially available. Taking azo coloring matters as an example, azo coloring matters synthesized by diazo coupling have been known for a long time and have been widely used industrially, especially used for coloring in various products, such as in the printing of books, clothing, food, furniture, and building materials, which are indispensable in modern life. In recent years, utilization of azo coloring matters in a wide range of fields, such as ink for inkjet printing, is progressing (see, for example, Patent Document 1) .

On the other hand, for use in precision electronic equipment, such as inkjet printers, there are a number of important issues that must be cleared, such as ensuring resolubility when the colored liquid is dried. Various methods have been studied to solve such issues; however, it has not been known that the addition of specific compounds can improve the performance of colored liquids and even the performance of colored recording media.

Patent Document 1: Japanese Unexamined Patent Application, Publication No. 2014-185201

DISCLOSURE OF THE INVENTION

Problems to be Solved by the Invention

An object of the present invention is to provide a colored liquid that has excellent resolubility when dried and that can give a colored product with excellent fastness, a colored liquid set including the colored liquid, a recording medium to which the colored liquid or each colored liquid included in the colored liquid set is attached, and a coloring method using the colored liquid or the colored liquid set.

Means for Solving the Problems

Specific means for achieving the above object include the following embodiments.

1) A colored liquid containing:

a coloring matter having a naphthalene skeleton in its molecule,
at least one compound selected from

a compound having two or more naphthalene skeletons in its molecule, excluding the coloring matter having a naphthalene skeleton in its molecule and a compound having a pyrazine skeleton in its molecule, and
a compound having a pyrazine skeleton in its molecule, excluding the coloring matter having a naphthalene skeleton in its molecule, and

water.

2) The colored liquid according to 1), in which the compound having two or more naphthalene skeletons in its molecule is a compound having a hydroxy group in its molecule.
3) The colored liquid according to 1) or 2), in which the compound having two or more naphthalene skeletons in its molecule is a compound having a binaphthalene skeleton with a substituent.
4) The colored liquid according to any one of 1) to 3), in which the compound having two or more naphthalene skeletons in its molecule is 1,1'-binaphthalene-2,2'-diol.
5) The colored liquid according to any one of 1) to 4), in which the compound having a pyrazine skeleton in its molecule is a compound represented by the following formula (1) :

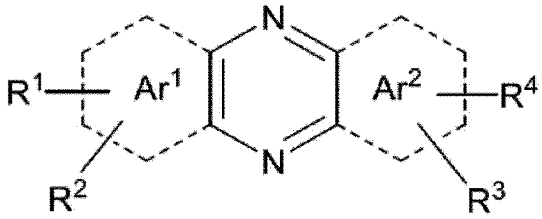

(1)

in formula (1), ring $Ar^1$ and ring $Ar^2$ represented by broken lines each independently represent a benzene ring or a naphthalene ring;

$R^1$ and $R^2$ represent substituents of ring $Ar^1$, and $R^3$ and $R^4$ represent substituents of ring $Ar^2$;

$R^1$, $R^2$, $R^3$, and $R^4$ each independently represent a hydrogen atom, a hydroxy group, a carboxy group, a halogeno group, an alkyl group, a phenyl group, a phenoxy group, a naphthyl group, a hydroxynaphthyl group, a naphthoxy group, an amino group, a nitro group, a sulfo group, a sulfamoyl group, an acetyl group, an acetamide group, a methylamino group, an ethylamino group, a cyano group, a methoxycarbonyl group, an ethoxycarbonyl group, a 3-methoxy-2-hydroxypropylamino group,

a phenylamino group, a methoxyamino group, a hydroxyethylamino group, a hydroxypropylamino group, an N-acetyl-N-methylamino group, or an acetoxyethoxyethylamino group.

6) The colored liquid according to any one of 1) to 5), in which the compound having a pyrazine skeleton in its molecule is a compound represented by the following formula (1-1):

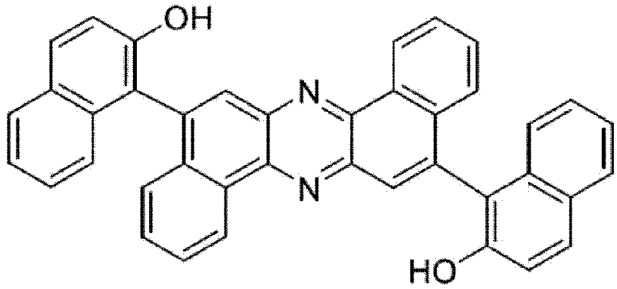

(1-1)

7) The colored liquid according to any one of 1) to 6), in which the coloring matter having a naphthalene skeleton in its molecule is an azo-based coloring matter having an azo bond in its molecule.

8) The colored liquid according to any one of 1) to 7), in which the coloring matter having a naphthalene skeleton in its molecule is an azo metal complex-based coloring matter.

9) The colored liquid according to 8), in which the azo metal complex-based coloring matter includes a metal selected from the group consisting of chromium, copper, iron, and cobalt.

10) The colored liquid according to any one of 1) to 9), in which when the content of the coloring matter having a naphthalene skeleton in its molecule is taken as 100 parts by mass, the content of the compound having two or more naphthalene skeletons in its molecule is less than 1.8 parts by mass.

11) The colored liquid according to any one of 1) to 10), in which when the content of the coloring matter having a naphthalene skeleton in its molecule is taken as 100 parts by mass, the content of the compound having a pyrazine skeleton in its molecule is less than 1.2 parts by mass.

12) The colored liquid according to any one of 1) to 11), in which the coloring matter having a naphthalene skeleton in its molecule is at least one coloring matter selected from the group consisting of C.I. Acid Brown 298; C.I. Acid Blue 193; and C.I. Acid Black 52, 52:1, 172, and 194,

the compound having two or more naphthalene skeletons in its molecule is 1,1'-binaphthalene-2,2'-diol, and the compound having a pyrazine skeleton in its molecule is a compound represented by the following formula (1-1):

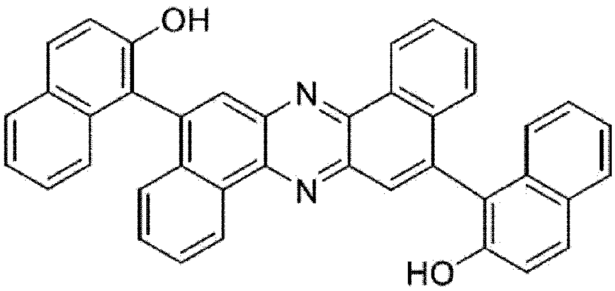

(1-1)

13) The colored liquid according to any one of 1) to 12), which contains both the compound having two or more naphthalene skeletons in its molecule and the compound having a pyrazine skeleton in its molecule.
14) The colored liquid according to any one of 1) to 13), further containing a water-soluble organic solvent.
15) A colored liquid set including the colored liquid according to any one of 1) to 14), and at least one colored liquid having a hue different from that of the colored liquid according to any one of 1) to 14).
16) A recorded medium to which the colored liquid according to any one of 1) to 14) or each colored liquid included in the colored liquid set according to 15) is attached.
17) The recording medium according to 16), in which the recording medium is a fiber.
18) A coloring method including performing coloring by attaching the colored liquid according to any one of 1) to 14) or each colored liquid included in the colored liquid set according to 15) to a recording medium.

Effects of the Invention

The present invention can provide a colored liquid that has excellent resolubility when dried and that can give a colored product with excellent fastness, a colored liquid set including the colored liquid, a recording medium to which the colored liquid or each colored liquid included in the colored liquid set is attached, and a coloring method using the colored liquid or the colored liquid set.

PREFERRED MODE FOR CARRYING OUT THE INVENTION

Specific embodiments to which the present invention is applied will be described in detail below. In the present specification, "C.I." is an abbreviation for color index.

<Colored Liquid>

The colored liquid according to the present embodiment contains:

a coloring matter having a naphthalene skeleton in its molecule,
at least one compound selected from

- a compound having two or more naphthalene skeletons in its molecule, excluding the coloring matter having a naphthalene skeleton in its molecule and a compound having a pyrazine skeleton in its molecule, and
- a compound having a pyrazine skeleton in its molecule, excluding the coloring matter having a naphthalene skeleton in its molecule, and

water.

As described above, by containing, in addition to a coloring matter having a naphthalene skeleton in its molecule, a compound having two or more naphthalene skeletons in its molecule and/or a compound having a pyrazine skeleton in its molecule, the performance of the colored liquid is improved, and the performance of the colored recording medium tends to be also improved. Although the reason for this is not clear, the present inventors assume as follows.
That is, it is considered that the compound having two or more naphthalene skeletons in its molecule and the compound having a pyrazine skeleton in its molecule contribute to the solubility and dissolution stability of the coloring matter having a naphthalene skeleton in its molecule, which consequently enhances the filterability of the colored liquid, prevents filter clogging, and suppresses undesirable precipitation of the coloring matter due to factors such as dryness. For the above reason, it is also considered that it will be easier to redissolve the dried colored liquid. Due to these performance improvements, it is considered that, for example, when the colored liquid is used as ink in an inkjet printer,

the occurrence of head filter and nozzle clogging, etc., can effectively prevented, and the ink ejection stability is improved.

Further, when a compound having two or more naphthalene skeletons in its molecule and/or a compound having a pyrazine skeleton in its molecule are contained, it is considered that as a result of preferential action of ultraviolet rays and oxidizing gases on these compounds, the fastness of the colored recording medium is improved. For example, when the recording medium is a fabric, light resistance tends to increase, and when the recording medium is paper, such as photo paper, light resistance and ozone resistance tend to increase.

The components contained in the colored liquid according to the present embodiment will be each described in detail below. The components described below may be used singly or in combination of two or more.

[Coloring Matter Having Naphthalene Skeleton in Its Molecule]

The coloring matter having a naphthalene skeleton in its molecule (hereinafter also referred to as "the naphthalene skeleton-containing coloring matter") may be a dye or a pigment. Examples of dyes include direct dyes, acid dyes, reactive dyes, disperse dyes (sublimation dyes, solvent dyes, etc.), cationic dyes, azoic dyes, sulfur dyes, mordant dyes, and the like. Preferred among these dyes are disperse dyes, cationic dyes, direct dyes, acid dyes, and reactive dyes.

Examples of the naphthalene skeleton-containing coloring matter include azo-based coloring matters having an azo bond in their molecule, azine-based coloring matters, azomethine-based coloring matters, amino ketone-based coloring matters, xanthene-based coloring matters, quinoline-based coloring matters, nitro-based coloring matters, methine-based coloring matters, stilbene-based coloring matters, styryl-based coloring matters, naphthalocyanine-based coloring matters, oxazole-based coloring matters, formazan-based coloring matters, anthraquinone-based coloring matters, phthalocyanine-based coloring matters, coumarin-based coloring matters, triphenylmethane-based coloring matters, and the like. Preferred among these are azo-based coloring matters.

When the naphthalene skeleton-containing coloring matter is an azo-based coloring matter, a metal may be contained in its molecule to form an azo metal complex-based coloring matter.

The metal in the azo metal complex-based coloring matter is not particularly limited as long as it is a metal that can form a complex together with an azo-based coloring matter. However, the metal is preferably selected from the group consisting of chromium, copper, iron, and cobalt.

Examples of the azo-based coloring matter or azo metal complex-based coloring matter include C.I. Acid Yellow 33 and 100; C.I. Acid Orange 7, 8, 9, 12, 16, 17, 19, 20, 23, 27, 30, 31, 41, 51, 55, 56, 127, 137, 159, and 160; C.I. Acid Red 4, 6, 9, 10, 11, 12, 13, 14, 15, 16, 17, 18, 20, 25, 25:1, 27, 30, 31, 32, 37, 42, 44, 54, 56, 57, 60, 66, 68, 70, 71, 74, 86, 88, 89, 97, 99, 102, 116, 118, 119, 127, 133, 134, 135, 137, 141, 142, 144, 145, 148, 151, 154, 158, 163, 173, 182, 184, 186, 231, 256, 257, 266, 276, 301, 308, 337, 355, 366, 374, 440, 442, and 444; C.I. Acid Brown 2, 3, 4, 5, 6, 7, 8, 14, 15, 16, 17, 20, 29, 32, 43, 44, 45, 46, 64, 86, 87, 88, 90, 91, 102, 105, 122, 146, 214, 282, 283, 294, 295, 296, 297, 298, 454, 469, and 471; C.I. Acid Violet 1, 2, 14, 27, 56, 62, 67, 78, 90, 91, 117, and 119; C.I. Acid Blue 36, 44, 70, 85, 92, 113, 116, 118, 120, 135, 155, 158, 158:1, 161, 171, 193, 194, 229, 234, 300, 328, and 349; C.I. Acid Green 12, 19, 34, 35, 45, 73, 74, 75, 76, 77, 122, and 125; C.I. Acid Black 3, 4, 5, 7, 16, 17, 18, 20, 21, 23, 24, 26, 16:1, 26:2, 27, 31, 32, 34, 35, 36, 43, 51, 52, 52:1, 63, 64, 107, 109, 112, 124, 155, 172, 194, and 234; C.I. Reactive Yellow 16; C.I. Reactive Orange 1, 4, 5, 7, 13, 16, 17, 18, 20, 35, 44, 56, 64, 72, 78, 84, 95, 97, and 124; C.I. Reactive Red 5, 7, 8, 9, 11, 13, 16, 22, 33, 43, 46, 55, 59, 65, 66, 84, 123, 136, 158, 159, 174, 180, 183, 186, 196, 206, 222, 224, 230, and 236; C.I. Reactive Brown 1, 2, 7, 8, 9, 10, 17, 23, 33, 43, 45, and 47; C.I. Reactive Violet 9; C.I. Reactive Blue 39, 40, 82, 112, and 243; C.I. Reactive Black 1, 3, 9, and 13; C.I. Mordant Brown 33; C.I. Mordant Black 7 and 17; Kayacel Red CB Liquid, Kayacel Black CN Liquid, Kayacelon React Brown CN-AM; C.I. Direct Yellow 52 and 87; C.I. Direct Orange 26, 29, 29:1, 102, 104, 108, and 118; C.I. Direct Red 1, 2, 4, 6, 7, 8, 10, 13, 14, 15, 16, 17, 22, 23, 24, 26, 28, 29, 31, 32, 33, 34, 36, 42, 44, 45, 50, 52, 53, 54, 55, 57, 59, 60, 61, 62, 64, 65, 83:1, 88, 89, 90, 95, 99, 117, 118, 119, 120, 122, 123, 126, 127, 127:1, 130, 141, 142, 144, 145, 147, 148, 149, 150, 152, 153, 154, 155, 168, 169, 173, 174, 175, 181, 186, 189, 191, 194, 212, 224, 225, 226, 227, 239, 242, 243, 250, 254, 257, 258, and 264; C.I. Direct Brown 2, 13, 14, 24, 25, 26, 46, 50, 56, 57, 58, 59, 60, 61, 63, 67, 68, 69, 70, 73, 74, 75, 86, 95, 99, 101, 112, 149, 151, 166, 167, 168, 171, 179, 186, 190, 202, 206, 208, 209, 210, 223, and 224; C.I. Direct Violet 1, 2, 4, 5, 6, 7, 8, 9, 10, 11, 12, 13, 14, 17, 21, 22, 25, 26, 27, 28, 31, 32, 35, 36, 37, 38, 39, 40, 41, 42, 43, 46, 47, 48, 51, 53, 56, 57, 62, 63, 64, 66, 72, 77, 78, 79, 80, 81, 83, 85, 87, 100, 102, and 103; C.I. Direct Blue 2, 3, 4, 8, 9, 12, 16, 19, 21, 22, 23, 26, 27, 29, 30, 31, 33, 34, 35, 36, 38, 39, 42, 43, 45, 48, 49, 50, 51, 54, 55, 58, 60, 63, 64, 65, 67, 69, 70, 71, 72, 74, 75, 78, 81, 82, 83, 90, 93, 96, 98, 110, 111, 116, 120, 120:1, 121, 122, 123, 124, 126, 127, 128, 129, 110, 131, 132, 133, 135, 136, 138, 140, 145, 148, 149, 150, 151, 152, 157, 158, 159, 162, 163, 164, 165, 166, 167, 168, 175, 176, 177, 183, 184, 185, 186, 200, 201, 203, 214, 215, 230, 231, 237, 239, 248, 258, 270, 273, 274, 278, 288, 289, 291, 295, 306, and 308; C.I. Direct Green 3, 11, 13, 19, 20, 21, 22, 23, 33, 34, 36, 38, 39, 42, 443, 49, 50, 51, 57, and 64; C.I. Direct Black 1, 2, 3, 9:1, 10, 14, 15, 17, 22, 24, 27, 29, 32, 36, 40, 48, 49, 51, 56, 71, 74, 75, 76, 77, 78, 80, 87, 91, 96, 97, 100, 101, 103, 112, 117, 118, 122, 131, 132, 141, 150, 151, 153, 156, 164, 173, 196, 197, 198, and 199; Kayacelon Red C-HB, Kayacelon Rubin C-BL, Kayafect Red S Liquid, Kayafect Red H Liquid 50, Kayaku Direct Fast Red S Liquid 10BX; C.I. Disperse Yellow 97; C.I. Disperse

Orange 13, 42, and 125; C.I. Disperse Red 6, 44, 81, 141, 151, 200, 220, 271, 330, and 334; C.I. Disperse Blue 15, 38, 85, 194, 260, 283, and 294; C.I. Disperse Black 1; C.I. Basic Yellow 41; C.I. Basic Orange 47; C.I. Sulphur Green 6; C.I. Sulphur Black 6 and 11; and the like. Preferred among these are those having a naphthol skeleton in their molecule. More preferred are C.I. Acid Brown 298; C.I. Acid Blue 193; and C.I. Acid Black 52, 52:1, 172, and 194. Even more preferred are C.I. Acid Brown 298, C.I. Acid Blue 193, and C.I. Acid Black 172.

The content of the naphthalene skeleton-containing coloring matter is generally 0.5 to 25 mass%, preferably 1 to 20 mass%, and more preferably 1 to 17 mass%, based on the total mass of the colored liquid. When the colored liquid according to the present embodiment is used as light-colored liquid or ink (so-called light ink) with a lower content of the naphthalene skeleton-containing coloring matter, the content of the naphthalene skeleton-containing coloring matter is generally 0.025 to 5 mass%, preferably 0.05 to 2.5 mass%, and more preferably 0.05 to 2 mass%, based on the total mass of the colored liquid.

[Compound Having Two or More Naphthalene Skeletons in Its Molecule]

The compound having two or more naphthalene skeletons in its molecule (hereinafter also referred to as "the naphthalene-based compound") is not particularly limited as long as the naphthalene skeleton-containing coloring matter and a compound having a pyrazine skeleton in its molecule are not included, and it is a compound having two or more naphthalene skeletons in its molecule.

Preferred among naphthalene-based compounds are compounds having a hydroxy group in their molecule and compounds having a binaphthalene skeleton in their molecule, more preferred are compounds having a substituted binaphthalene skeleton in their molecule, even more preferred are compounds having both a hydroxy group and a binaphthalene skeleton in their molecule, and particularly preferred is 1,1'-binaphthalene-2,2'-diol. 1,1'-Binaphthalene-2,2'-diol may be any of racemic, R-, and S-isomers.

The content of the naphthalene-based compound is preferably less than 1.8 parts by mass, more preferably 0.0001 parts by mass or more and less than 1.8 parts by mass, even more preferably 0.0002 parts by mass or more and less than 1.5 parts by mass, particularly preferably 0.0005 to 1.0 part by mass, and extremely preferably 0.001 to 1.0 part by mass, based on the content of the naphthalene skeleton-containing coloring matter, which is taken as 100 parts by mass.

[Compound Having Pyrazine Skeleton in Its Molecule]

The compound having a pyrazine skeleton in its molecule (hereinafter also referred to as "the pyrazine-based compound") is not particularly limited as long as the naphthalene skeleton-containing coloring matter is not included, and it is a compound having a pyrazine skeleton in its molecule.

Preferred among pyrazine-based compounds is a compound represented by the following formula (1).

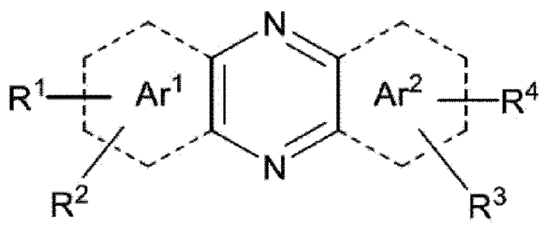

(1)

In the above formula (1), ring $Ar^1$ and ring $Ar^2$ represented by broken lines each independently represent a benzene ring or a naphthalene ring. $R^1$ and $R^2$ represent substituents of ring $Ar^1$, and $R^3$ and $R^4$ represent substituents of ring $Ar^2$. $R^1$, $R^2$, $R^3$, and $R^4$ each independently represent a hydrogen atom, a hydroxy group, a carboxy group, a halogeno group, an alkyl group, a phenyl group, a phenoxy group, a naphthyl group, a hydroxynaphthyl group, a naphthoxy group, an amino group, a nitro group, a sulfo group, a sulfamoyl group, an acetyl group, an acetamide group, a methylamino group, an ethylamino group, a cyano group, a methoxycarbonyl group, an ethoxycarbonyl group, a 3-methoxy-2-hydroxypropylamino group, a phenylamino group, a methoxyamino group, a hydroxyethylamino group, a hydroxypropylamino group, an N-acetyl-N-methylamino group, or an acetoxyethoxyethylamino group.

Examples of halogeno groups include fluorine, chlorine, bromine, and iodine groups.

Examples of alkyl groups include $C_1$-$C_{20}$ linear or branched alkyl groups. Specific examples of alkyl groups include, but are not limited to, methyl, ethyl, n-propyl, isopropyl, n-butyl, isobutyl, and t-butyl groups.

When ring $Ar^1$ and ring $Ar^2$ represent naphthalene rings, each naphthalene ring can arbitrarily select the position of the ring bond with respect to the pyrazine ring. For example, when ring $Ar^1$ and ring $Ar^2$ both represent naphthalene

rings, structures represented by the following formulas (A) to (D) can be taken.

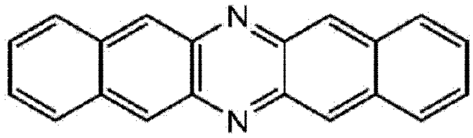

(A)

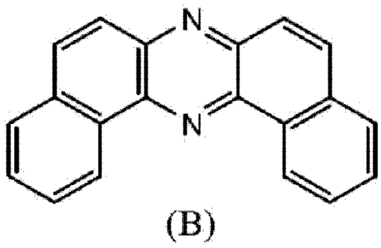

(B)

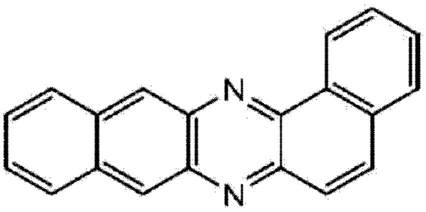

(C)

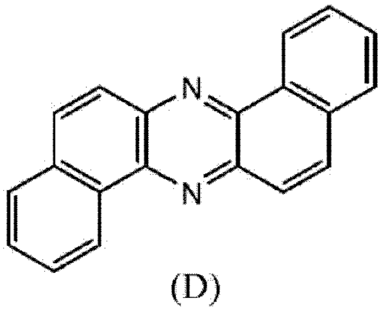

(D)

Particularly preferred among the compounds represented by formula (1) is a compound represented by the following formula (1-1) .

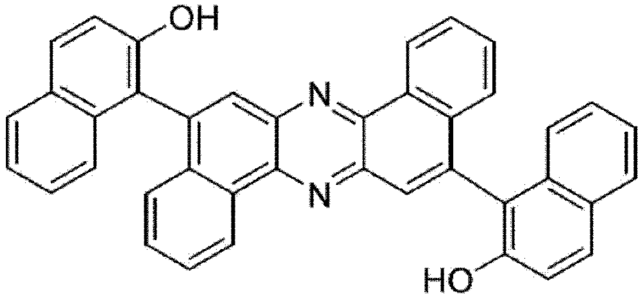

(1-1)

The compound represented by formula (1) is a type of azine dyes well known as C.I. Acid Black 2 etc., and has been widely used, for example, for dying of fibers. There are various types of azine dyes, including those with phenazine and naphthazine rings. For example, such azine dyes can be obtained based on the Non-Patent Document [Hiroshi Horiguchi (1969), "Synthetic Dye Overview", Sankyo Publishing Co., Ltd.].

Further, the compound represented by formula (1-1) can be obtained, for example, by bromination of the commercially available compound represented by formula (D), followed by the Suzuki-Miyaura cross-coupling reaction of boronated 2-naphthol.

The content of the pyrazine-based compound is preferably less than 1.2 parts by mass, more preferably 0.0001 parts by mass or more and less than 1.2 parts by mass, even more preferably 0.0002 to 1.0 part by mass, particularly preferably 0.0005 to 0.5 parts by mass, and extremely preferably 0.001 to 0.5 parts by mass, based on the content of the naphthalene skeleton-containing coloring matter, which is taken as 100 parts by mass.

The colored liquid according to the present embodiment preferably contains both the naphthalene-based compound and the pyrazine-based compound, and more preferably contains both 1,1'-binaphthalene-2,2'-diol and the compound represented by formula (1-1).

[Water]

As water, ion-exchanged water, distilled water, and the like with few impurities are preferred.

The water content is preferably 1 to 99 mass%, and more preferably 5 to 95 mass%, based on the total mass of the colored liquid.

[Water-Soluble Organic Solvent]

The colored liquid according to the present embodiment may further contain a water-soluble organic solvent. Examples of water-soluble organic solvents include alcohols, pyrrolidones, polyoxyalkylene diglyceryl ethers, and the like. Examples of alcohols include $C_2$-$C_6$ alcohols having 2 or 3 hydroxy groups, such as glycerol, 1,3-propanediol, 1,2-butanediol, 1,3-butanediol, 1,4-butanediol, 1,3-pentanediol, 1,5-pentanediol, 1,2-hexanediol, 1,6-hexanediol, 2,4-diethyl-1,5-pentanediol, 3-methyl-1,3-butanediol, and 3-methyl-1,5-pentanediol; polyglyceryl ethers, such as diglycerol and polyglycerol; polyoxy $C_2$-$C_3$ alkylene polyglyceryl ethers, such as polyoxyethylene polyglyceryl ether and polyoxypropylene polyglyceryl ether; mono-, di-, or tri-$C_2$-$C_3$ alkylene glycols, such as ethylene glycol, diethylene glycol, triethylene glycol, propylene glycol, dipropylene glycol, and polyethylene glycol; poly $C_2$-$C_3$ alkylene glycols (preferably in liquid form) having 4 or more repeating units and a molecular weight of about 20000 or less, such as polyethylene glycol and polypropylene glycol; $C_1$-$C_6$ monoalkyl ethers of polyhydric alcohols, such as ethylene glycol monomethyl ether, ethylene glycol monoethyl ether, diethylene glycol monomethyl ether, diethylene glycol monoethyl ether, diethylene glycol monobutyl ether (butyl carbitol), triethylene glycol monomethyl ether, triethylene glycol monoethyl ether, triethylene glycol monobutyl ether (butyl triglycol), propylene glycol monomethyl ether, propylene glycol monoethyl ether (1-ethoxy-2-propanol), dipropylene glycol monopropyl ether (1-(1-methyl-2-propoxyethoxy)-2-propanol), dipropylene glycol monobutyl ether (1-(2-butoxy-1-methylethoxy)propan-2-ol), diethylene glycol monoethyl ether, and diethylene glycol monohexyl ether (hexyl carbitol); $C_1$-$C_6$ dialkyl ethers of polyhydric alcohols, such as diethylene glycol diethyl ether (diethyl carbitol); glycol monoethers, such as 3-methoxy-1-butanol and 3-methoxy-3-methylbutanol; glycol phenyl ethers, such as propylene glycol (mono)phenyl ether (1-phenoxy-2-propanol); and the like. Examples of pyrrolidones include 2-pyrrolidone, N-methyl-2-pyrrolidone, 1-(2-hydroxyethyl)-2-pyrrolidone, and the like. Examples of polyoxyalkylene diglyceryl ethers include polyoxypropylene diglyceryl ethers, such as trade names SC-P400, SC-P750, SC-P1000, SC-P1200, and SC-P1600, produced by Sakamoto Yakuhin Kogyo Co., Ltd.; polyoxyethylene diglyceryl ethers, such as trade names SC-E450, SC-E750, SC-E1000, SC-E1500, and SC-E2000, produced by Sakamoto Yakuhin Kogyo Co., Ltd.; and the like. Preferred among these are glycerol, diglycerol, 1,3-propanediol, 1,5-pentanediol, 3-methyl-1,3-butanediol, 3-methyl-1,5-pentanediol, 2,4-diethyl-1,5-pentanediol, 1,2-hexanediol, ethylene glycol, propylene glycol, diethylene glycol, dipropylene glycol, diethylene glycol monobutyl ether, 1,3-butanediol, 1,6-hexanediol, triethylene glycol, triethylene glycol monobutyl ether, 1-(2-hydroxyethyl)-2-pyrrolidone, and 2-pyrrolidone.

The content of the water-soluble organic solvent is generally 0 to 50 mass%, preferably 1 to 50 mass%, and more preferably 5 to 40 mass%, based on the total mass of the colored liquid.

[Additives]

The colored liquid according to the present embodiment may further contain other additives. Examples of additives include surfactants, pH adjusting agents, antiseptic antifungal agents, dye solubilizing agents, hydrotropic agents, moisturizers, and the like.

The total content of additives is generally 0 to 10 mass%, and preferably about 0.05 to 5 mass%, based on the total mass of the colored liquid.

Examples of surfactants include anionic, cationic, amphoteric, and nonionic surfactants. Preferred among these are nonionic surfactants.

Examples of anionic surfactants include alkyl sulfocarboxylate, $\alpha$-olefin sulfonate, polyoxyethylene alkyl ether acetate, N-acylamino acids or salts thereof, N-acylmethyltaurine salts, alkyl sulfate polyoxyalkyl ether sulfate, alkyl sulfate polyoxyethylene alkyl ether phosphate, rosin acid soap, castor oil sulfate, lauryl alcohol sulfate, alkyl phenol phosphate, alkyl phosphate, alkyl aryl sulfonate, diethyl sulfosuccinate, diethylhexyl sulfosuccinate, dioctyl sulfosuccinate, and the like.

Examples of cationic surfactants include 2-vinylpyridine derivatives, poly 4-vinylpyridine derivatives, and the like.

Examples of amphoteric surfactants include betaine lauryldimethylaminoacetate, 2-alkyl-N-carboxymethyl-N-hydroxyethylimidazolinium betaine, cocamidopropyl betaine, polyoctylpolyaminoethylglycine, imidazoline derivatives, and the like.

Examples of nonionic surfactants include ethers, such as polyoxyethylene nonylphenyl ether, polyoxyethylene octylphenyl ether, polyoxyethylene dodecylphenyl ether, polyoxyethylene oleyl ether, polyoxyethylene lauryl ether, and polyoxyethylene alkyl ether; esters, such as polyoxyethylene oleate, polyoxyethylene distearate, sorbitan laurate, sorbitan monostearate, sorbitan monooleate, sorbitan sesquioleate, polyoxyethylene monooleate, and polyoxyethylene stearate; acetylene alcohols, such as 2,4,7,9-tetramethyl-5-decyne-4,7-diol, 3,6-dimethyl-4-octyne-3,6-diol, and 3,5-dimethyl-1-hexyn-3-ol; trade names Surfynol 104E, 104H, 104A, 104PA, 104PG50, DF110D, 82, 420, 440, 465, and 485, and Olfine STG, produced by Nissin Chemical Industry Co., Ltd.; and the like. Preferred among these are the Surfynol series, and more preferred are Surfynol 104PG50, DF110D, 420, 440, and 465.

When the colored liquid according to the present embodiment contains a surfactant, the content thereof is

generally 0.001 to 2 mass%, and preferably 0.01 to 1.5 mass%, based on the total mass of the colored liquid.

As the pH adjusting agent, any substance can be used as long as it can control the pH of the colored liquid within the range of 6.0 to 11.0. Examples of pH adjusting agents include alkanolamines, such as diethanolamine, dimethylethanolamine, diethylethanolamine, triethanolamine; hydroxides of alkali metals, such as lithium hydroxide, sodium hydroxide, and potassium hydroxide; ammonium hydroxide (ammonia water); carbonates of alkali metals, such as lithium carbonate, sodium carbonate, and potassium carbonate; tris(hydroxymethyl)aminomethane; and the like. Preferred among these is triethanolamine.

When the colored liquid according to the present embodiment contains a pH adjusting agent, the content thereof is generally 0.01 to 2 mass%, and preferably 0.05 to 1 mass%, based on the total mass of the colored liquid.

Examples of antiseptic antifungal agents include sodium dehydroacetate, sodium benzoate, sodium pyridinethione-1-oxide, zinc pyridinethione-1-oxide, 1,2-benzisothiazolin-3-one, and amine salts of 1-benzisothiazolin-3-one; Biox P520LP and Preventol BIT 20N, produced by Lanxess; ROCIMA 640, produced by Dow Chemical Company; Mergal K-20, produced by TROY; Proxel GXL and Proxel XL2, produced by Lonza K.K.; and the like. Preferred among these are Proxel GXL and Proxel XL2.

When the colored liquid according to the present embodiment contains an antiseptic antifungal agent, the content thereof is generally 0.001 to 2 mass%, and preferably 0.01 to 1 mass%, based on the total mass of the colored liquid.

Examples of dye solubilizing agents include urea, ε-caprolactam, ethylene carbonate, and the like.

Examples of hydrotropic agents include urea, thiourea, cyanoguanidine, guanidine phosphate, guanidine sulfamate, and the like.

Examples of moisturizers include urea, glycerol, and the like.

[Method for Preparing Colored Liquid]

The colored liquid according to the present embodiment can be obtained by dissolving a naphthalene skeleton-containing coloring matter, a naphthalene-based compound, a pyrazine-based compound, and optionally other additives in a solvent, such as water.

As the naphthalene skeleton-containing coloring matter, naphthalene-based compound, and pyrazine-based compound, commercially available products may be purchased, or they may be synthesized. The naphthalene-based compound and pyrazine-based compound can also be obtained, for example, by separation and purification of by-products generated during synthesis of the naphthalene skeleton-containing coloring matter. For separation and purification, generally known methods of purifying coloring matters and chemical substances can be employed. Specific examples of separation and purification methods include the recrystallization method, sublimation method, dialysis method, salting-out method, ion-exchange resin method, column chromatography method, thin-layer chromatography method, and paper chromatography method described in the Non-Patent Document [Journal of Synthetic Organic Chemistry, Japan, 1955, Vol. 13, No. 4, page 106], as well as a method using an adsorbent, an ultrafiltration method, a reverse osmosis method, a distillation method, and the like.

Examples of ion-exchange resins include cation-exchange resins, anion-exchange resins, and the like. Examples of adsorbents include active carbon, zeolite, diatomaceous earth, cellulose fibers, chelate fibers, synthetic adsorbents, and the like. In the ion-exchange resin method or the method using an adsorbent, a coloring matter liquid prepared by dissolving or dispersing a coloring matter in water or an appropriate organic solvent may be mixed with an ion-exchange resin or an adsorbent, and the mixture may be stirred and then filtered. Alternatively, a coloring matter liquid prepared by dissolving or dispersing a coloring matter in water or an appropriate organic solvent may be passed through a column packed with an ion-exchange resin or an adsorbent.

As a method for detecting or quantifying the naphthalene-based compound and the pyrazine-based compound, general analysis methods for measuring organic compounds can be employed. Examples of specific analysis methods include nuclear magnetic resonance analysis, high-performance liquid chromatography, high-performance liquid chromatography/mass spectrometry, paper chromatography, thin-layer chromatography, gas chromatography, gas chromatography/mass spectrometry, gel permeation chromatography, elemental analysis, infrared spectrometry, infrared/visible spectroscopy, and the like.

[Applications of Colored Liquid]

The colored liquid according to the present embodiment can be used for various recording applications, such as printing, copying, marking, writing, drawing, and stamping, and is especially suitable for inkjet recording. When the colored liquid according to the present embodiment is used as ink for inkjet recording, the colored liquid according to the present embodiment may be used as it is, or may further contain other additives, if necessary.

When the colored liquid according to the present embodiment is used as ink for inkjet recording, it is preferable

to perform microfiltration using a membrane filter or the like. The pore size of the membrane filter is generally 0.1 to 1 μm, and preferably 0.1 to 0.5 μm.

Further, when the colored liquid according to the present embodiment is used as ink for inkjet recording, the viscosity of the colored liquid at 25°C is preferably 3 to 20 mPa·s when measured by an E-type viscometer. The surface tension of the colored liquid at 25°C is preferably 20 to 45 mN/m when measured by the plate method. The viscosity and surface tension of the colored liquid are each preferably adjusted to an appropriate value within the above range, in consideration of the ejection volume, response speed, droplet flight characteristics, ink jet head characteristics, etc. of inkjet printers.

<Colored Liquid Set>

The colored liquid set according to the present embodiment includes the colored liquid according to the present embodiment and at least one colored liquid with a hue different from that of the colored liquid according to the present embodiment. Examples of colored liquids that may be included in the colored liquid set according to the present embodiment include a magenta colored liquid, a cyan colored liquid, a yellow colored liquid, a blue colored liquid, a green colored liquid, an orange colored liquid, a gray colored liquid, a black colored liquid, and the like.

<Recording Medium and Coloring Method>

The recording medium according to the present embodiment is such that the colored liquid according to the present embodiment or each colored liquid included in the colored liquid set according to the present embodiment is attached thereto. Further, the coloring method according to the present embodiment is to perform coloring by attaching the colored liquid according to the present embodiment or each colored liquid included in the colored liquid set according to the present embodiment to a recording medium.

Examples of the recording medium include plain paper, resin-coated paper, inkjet exclusive paper, glossy paper, glossy films, sheets for information transmission such as paper for electrophotography; fibers (cotton, linen, nylon, wool, silk, etc.), fabrics; glass; metal; ceramics; leather; substrates for color filters; and the like. A sheet-like recording medium is preferably used as the recording medium; however, a recording medium with a three-dimensional shape other than a sheet-like shape, such as a spherical shape or a rectangular parallelepiped shape, may also be used.

The method for attaching the colored liquid to the recording medium is not particularly limited. For example, an inkjet recording method is preferred.

Examples of preferable recording media used for inkjet recording include those obtained by providing substrates, such as paper, synthetic paper, and films, with ink-receiving layers. Such an ink-receiving layer is provided, for example, by impregnating or coating the substrate with a cationic polymer, or by applying inorganic fine particles, such as porous silica, alumina sol, or special ceramics, which can absorb the coloring matter in the colored liquid, to the substrate surface together with a hydrophilic polymer, such as polyvinyl alcohol or polyvinyl pyrrolidone. Recording media provided with such ink-receiving layers are generally called inkjet exclusive paper (film), glossy paper (film), etc. Among these, those that are susceptible to oxidizing gases in the air, such as ozone gas, are types of inkjet exclusive paper in which inorganic fine particles, such as porous silica, alumina sol, or special ceramics, which can absorb the coloring matter in the colored liquid, are applied to the substrate surface. Typical examples of exclusive paper available commercially are trade names Photo Paper Glossy Pro "Platinum Grade" and Photo Paper Glossy Gold, produced by Canon Inc.; trade names Photo Paper Crispia (High Gloss), Photo Paper (Gloss), and Photo Matte Paper, produced by Seiko Epson Corporation; trade name Advanced Photo Paper (Glossy), produced by Hewlett Packard Japan, G.K.; trade name Premium Glossy Photo Paper, produced by Brother Industries, Ltd.; and the like. Of course, plain paper can also be used, and specific examples include trade name PB Paper GF-500, produced by Canon Inc.; trade name Double-Sided High Quality Plain Paper, produced by Seiko Epson Corporation; PPC (plain paper copy) paper; and the like.

Preferred recording media used for inkjet recording include fibers. As the fibers, polyamide-based fibers, blended fibers containing polyamide-based fibers, cellulosic fibers, blended fibers containing cellulosic fibers, etc. are preferably used. Examples of polyamide-based fibers include silk, wool, nylon, and the like. Examples of cellulosic fibers include cotton, linen, rayon, polynosic, and the like. Examples of blended fibers include those obtained by blending polyamide-based fibers or cellulosic fibers with other fibers. The fibers also include fiber structures (fabrics etc.).

<Fiber Dyeing Method>

The fiber dyeing method according to the present embodiment uses the colored liquid according to the present embodiment as ink, and includes performing at least the following steps in series.

[Step A]

A step of attaching ink to fibers by ink jetting, screen printing, dip dyeing, continuous dyeing, or the like.

[Step B]

A step of fixing, to the fibers, the coloring matter of the ink attached to the fibers.

[Step C]

A step of washing the unfixed coloring matter remaining on the fibers.

Examples of the inkjet printer that can be used in step A include those using a piezoelectric method that takes advantage of mechanical vibration, a Bubble Jet (registered trademark) method that takes advantage of bubbles generated by heating, and the like.

Examples of step B include a method of pre-drying the fibers, to which ink is attached, by leaving them at room temperature to 130°C for about 0.5 to 30 minutes, followed by steaming treatment to fix the coloring matter to the fibers under moist heat conditions, and the like. For the steaming treatment, it is preferable to place the fibers in an environment with a relative humidity of 80 to 100% and a temperature of 95 to 105°C for 5 to 30 minutes.

In step C, it is preferable to wash the fibers after fixing the coloring matter with water. During washing, water containing a surfactant may be used for washing. After step C, the washed fibers are dried generally at 40 to 120°C for 5 to 30 minutes to obtain a dried dyed product.

[Pretreatment Step]

For the purpose of, for example, preventing bleeding of the coloring matter, the method may further include a step of pretreating the fibers before step A. When printing polyamide or cellulose fibers, it is preferable to include such a pretreatment step.

Examples of the pretreatment step include a step in which an aqueous solution containing a sizing agent and a pH adjusting agent is used as a pretreatment liquid for the fibers and applied to the fibers before step A. It is preferable that the pretreatment liquid further contains a hydrotropic agent.

Examples of the sizing agent contained in the pretreatment liquid include natural gums, such as guar and locust bean; starch; seaweeds, such as sodium alginate and Gloiopeltis; plant skins, such as pectic acid; cellulose derivatives, such as methyl cellulose, ethyl cellulose, hydroxyethyl cellulose, and carboxymethyl cellulose; processed starch, such as carboxymethyl starch; processed natural gums, such as shiratsu gum and roasted bean gum; synthetic glues, such as polyvinyl alcohol and polyacrylates; and the like. Preferred among these are natural gums, such as guar and locust bean; processed natural gums, such as shiratsu gum and roasted bean gum; and the like.

Examples of the pH adjusting agent contained in the pretreatment liquid include alkaline sodium salts, such as sodium carbonate and sodium hydrogen carbonate; acidic ammonium salts, such as ammonium sulfate, ammonium tartrate, and ammonium acetate; and the like.

Examples of the hydrotropic agent contained in the pretreatment liquid include urea, dimethyl urea, thiourea, monomethyl thiourea, dimethyl thiourea, and the like. Preferred among these is urea.

It is difficult to generally determine the content of each component in the pretreatment liquid because, for example, it varies depending on the blend ratio of blended fibers when using the blended fibers. As an indication thereof, based on the total mass of the pretreatment liquid, the content of the sizing agent is 0.5 to 5 mass%, the content of the pH adjusting agent is 0.5 to 5 mass%, and the balance is water. When the pretreatment liquid further contains a hydrotropic agent, the content of the hydrotropic agent is preferably 1 to 20 mass% based on the total mass of the pretreatment liquid. The pretreatment liquid is preferably acidic, and the pH is generally in the range of 7 or less, and preferably 5 to 7.

For example, the padding method is used to apply the pretreatment liquid to fibers. The padding squeeze ratio is preferably about 40 to 90%, and more preferably about 60 to 80%.

[Post-Treatment Step]

If necessary, the dyed product can be treated with a fixing agent, an ultraviolet absorber, an antioxidant, etc., as a post-treatment to improve light fastness, moisture fastness, and chlorine fastness.

Examples of the fixing agent used in the post-treatment include polyamine-based, polycation-based, tannin-based, and synthetic tannin-based fixing agents.

Examples of the ultraviolet absorber used in the post-treatment include benzophenone-based compounds, benzotriazole-based compounds, cinnamic acid-based compounds, triazine-based compounds, stilbene-based compounds, and the like. In addition, it is also possible to use compounds that absorb ultraviolet rays and emit fluorescence, typified by benzoxazole-based compounds, so-called fluorescent brightening agents.

Examples of the antioxidant used in the post-treatment include L-ascorbic acid (also known as vitamin C), erythorbic acid, $\alpha$-tocopherol (also known as vitamin E), and the like.

For all the matters etc. described above, the combination of preferred matters is more favorable, and the combination of more preferred matters is even more favorable. The same applies to the combination of preferred and more preferred matters, the combination of more preferred and even more preferred matters, and the like.

## EXAMPLES

The present invention will be described in more detail below with reference to Examples; however, the present invention is not limited to the Examples. The inks in the Examples are all included in the above colored liquids.

<Examples 1 to 10 and Comparative Examples 1 to 3: Preparation of Colored Liquids>

Commercially available C.I. Acid Blue 193, C.I. Acid Black 172, and C.I. Acid Brown 298 were purified by activated carbon filtration, microfiltration, and ultrafiltration. The purified C.I. Acid Blue 193, C.I. Acid Black 172, or C.I. Acid Brown 298, 1,1'-binaphthalene-2,2'-diol (naphthalene-based compound), a compound represented by the above formula (1-1) (pyrazine-based compound), and water were mixed so that the compositions were as shown in the following Tables 1 to 3, thereby obtaining colored liquids of Examples 1 to 10 and Comparative Examples 1 to 3. In Tables 1 to 3, the numerical value of each component indicates parts by mass.

[Table 1]

| | Example | | | | |
|---|---|---|---|---|---|
| | 1 | 2 | 3 | 4 | 5 |
| C.I. Acid Blue 193 | 10 | 10 | 10 | 10 | 10 |
| C.I. Acid Black 172 | 0 | 0 | 0 | 0 | 0 |
| C.I. Acid Brown 298 | 0 | 0 | 0 | 0 | 0 |
| 1,1'-Binaphthalene -2,2'-diol | 0.097 | 0.082 | 0.0039 | 0.0012 | 0.0007 |
| Compound of formula (1-1) | 0.031 | 0.038 | 0.0004 | 0.0003 | 0.0003 |
| Water | Balance | Balance | Balance | Balance | Balance |
| Total | 100 | 100 | 100 | 100 | 100 |

[Table 2]

| | Example | | | | |
|---|---|---|---|---|---|
| | 6 | 7 | 8 | 9 | 10 |
| C.I. Acid Blue 193 | 10 | 0 | 10 | 10 | 0 |
| C.I. Acid Black 172 | 0 | 10 | 0 | 0 | 0 |
| C.I. Acid Brown 298 | 0 | 0 | 0 | 0 | 10 |
| 1,1'-Binaphthalene -2,2'-diol | 0.0001 | 0.0001 | 0.004 | 0 | 0.0003 |
| Compound of formula (1-1) | 0.0001 | 0.0001 | 0 | 0.004 | 0.0017 |
| Water | Balance | Balance | Balance | Balance | Balance |
| Total | 100 | 100 | 100 | 100 | 100 |

[Table 3]

| | Comparative Example | | |
|---|---|---|---|
| | 1 | 2 | 3 |
| C.I. Acid Blue 193 | 10 | 0 | 0 |
| C.I. Acid Black 172 | 0 | 10 | 0 |
| C.I. Acid Brown 298 | 0 | 0 | 10 |
| 1,1'-Binaphthalene -2,2'-diol | 0 | 0 | 0 |
| Compound of formula (1-1) | 0 | 0 | 0 |
| Water | Balance | Balance | Balance |
| Total | 100 | 100 | 100 |

<Evaluation>

The colored liquids prepared in the above manner were each used to perform the following evaluation tests. The results are shown in the following Tables 4 and 5. The colored liquids of Examples 1 to 10 all had good filterability when the entire amount thereof was filtered through a mixed cellulose filter with a diameter of 47 mm and a pore size of 0.2 μm (produced by Advantec Co., Ltd.), and foreign matter and coloring hardly remained on the filter.

[Evaluation of Drought Resistance]

After 1 part by mass of each colored liquid was added dropwise on a glass petri dish with an outer diameter of 32 mm (produced by Tokyo Glass Instruments Co., Ltd., FINE petri dish), the sample was allowed to stand in a drier at 30°C. Then, observations were made at regular intervals, and the drought resistance was evaluated according to the following criteria. If the drought resistance is evaluated as "D", it is not practical.

-Evaluation criteria-

A: After 6 hours, the colored liquid on the petri dish is not dry (flowable).
B: After 4 hours, the colored liquid on the petri dish is not dry (flowable).
C: After 2 hours, the colored liquid on the petri dish is not dry (flowable).
D: After 1 hour, the colored liquid on the petri dish is not dry (flowable).

[Evaluation of Resolubility]

0.5 parts by mass of each colored liquid was added dropwise on a glass petri dish with an outer diameter of 32 mm (produced by Tokyo Glass Instruments Co., Ltd., FINE petri dish), and naturally dried. Then, 0.5 parts of water was added dropwise, and the resolubility was evaluated according to the following criteria. If the resolubility is evaluated as "D", it is not practical.

-Evaluation criteria-

A: It is redissolved within 5 minutes.
B: It is redissolved within more than 5 minutes and 10 minutes or less.
C: It is redissolved within more than 10 minutes and 30 minutes or less.
D: It remains undissolved even after 30 minutes and cannot be redissolved.

Incidentally, when dissolved or dispersed components of ink become unstable due to an increase in solid concentration caused by evaporation, etc. of volatile components in the ink, and thereby a phenomenon of aggregation or precipitation of the components occurs to clog a nozzle, etc., the "resolubility" is considered to serve as a criterion

that the function of the nozzle is restored by redissolving or redispersing the components by supplying new ink or by other means (see Journal of the Imaging Society of Japan, Vol. 41, No. 2 (2002), page 182). Since the inability of ink to redissolve when it dries means that the nozzle function cannot be restored, such ink is not suitable for practical use.

[Table 4]

| | Example | | | | | | | | | |
|---|---|---|---|---|---|---|---|---|---|---|
| | 1 | 2 | 3 | 4 | 5 | 6 | 7 | 8 | 9 | 10 |
| Drought resistance | A | A | C | B | B | B | B | B | C | B |
| Resolubility | A | A | C | B | B | C | C | B | C | B |

[Table 5]

| | Comparative Example | | |
|---|---|---|---|
| | 1 | 2 | 3 |
| Drought resistance | B | B | B |
| Resolubility | D | D | D |

As shown in Tables 4 and 5, the colored liquids of Examples 1 to 10, which contained a naphthalene-based compound and/or a pyrazine-based compound, all had both practical drought resistance and resolubility. In addition, the colored liquids of Examples 1 to 10 also had good filterability.

<Examples 11 to 26 and Comparative Examples 4 to 6: Preparation of Inks>

The components shown in the following Tables 6 to 9 were mixed to obtain inks of Examples 11 to 26 and Comparative Examples 4 to 6. In Tables 6 to 9, the numerical value of each component indicates parts by mass. Further, in Tables 6 to 9, each abbreviation indicates the following.

TEG: triethylene glycol (produced by Mitsubishi Chemical Corporation)
TEGMBE: triethylene glycol monobutyl ether (produced by Kanto Chemical Co., Inc.)
Surfynol 465: surfactant (produced by Nissin Chemical Industry Co., Ltd.)
Proxel XL2: antiseptic antifungal agent (produced by Lonza K.K.)
TEA: triethanolamine (produced by Mitsui Chemicals, Inc.)
2Py: 2-pyrrolidone (produced by Mitsubishi Chemical Corporation)
Gly: glycerol (produced by Junsei Chemical Co., Ltd.)

[Table 6]

| | Example | | | | |
|---|---|---|---|---|---|
| | 11 | 12 | 13 | 14 | 15 |
| C.I. Acid Blue 193 | 5 | 5 | 5 | 5 | 5 |
| C.I. Acid Black 172 | 0 | 0 | 0 | 0 | 0 |
| C.I. Acid Brown 298 | 0 | 0 | 0 | 0 | 0 |
| 1,1'-Binaphthalene -2,2'-diol | 0.049 | 0.041 | 0.002 | 0.0006 | 0.0004 |
| Compound of formula (1-1) | 0.016 | 0.019 | 0.0002 | 0.0002 | 0.0002 |
| TEG | 5 | 5 | 5 | 5 | 5 |
| TEGMBE | 10 | 10 | 10 | 10 | 10 |
| Urea | 5 | 5 | 5 | 5 | 5 |
| Surfynol 465 | 0.2 | 0.2 | 0.2 | 0.2 | 0.2 |

(continued)

| | Example | | | | |
|---|---|---|---|---|---|
| | 11 | 12 | 13 | 14 | 15 |
| Proxel XL2 | 0.1 | 0.1 | 0.1 | 0.1 | 0.1 |
| TEA | 0.5 | 0.5 | 0.5 | 0.5 | 0.5 |
| 2Py | 4 | 4 | 4 | 4 | 4 |
| Gly | 8 | 8 | 8 | 8 | 8 |
| Water | Balance | Balance | Balance | Balance | Balance |
| Total | 100 | 100 | 100 | 100 | 100 |

[Table 7]

| | Example | | | |
|---|---|---|---|---|
| | 16 | 17 | 18 | 19 |
| C.I. Acid Blue 193 | 5 | 5 | 0 | 0 |
| C.I. Acid Black 172 | 0 | 0 | 0 | 5 |
| C.I. Acid Brown 298 | 0 | 0 | 5 | 0 |
| 1,1'-Binaphthalene -2,2'-diol | 0.002 | 0 | 0.0001 | 0.00005 |
| Compound of formula (1-1) | 0 | 0.002 | 0.0008 | 0.00005 |
| TEG | 5 | 5 | 5 | 5 |
| TEGMBE | 10 | 10 | 10 | 10 |
| Urea | 5 | 5 | 5 | 5 |
| Surfynol 465 | 0.2 | 0.2 | 0.2 | 0.2 |
| Proxel XL2 | 0.1 | 0.1 | 0.1 | 0.1 |
| TEA | 0.5 | 0.5 | 0.5 | 0.5 |
| 2Py | 4 | 4 | 4 | 4 |
| Gly | 8 | 8 | 8 | 8 |
| Water | Balance | Balance | Balance | Balance |
| Total | 100 | 100 | 100 | 100 |

[Table 8]

| | Example | | | | | | |
|---|---|---|---|---|---|---|---|
| | 20 | 21 | 22 | 23 | 24 | 25 | 26 |
| C.I. Acid Blue 193 | 5 | 5 | 5 | 5 | 5 | 5 | 5 |
| C.I. Acid Black 172 | 0 | 0 | 0 | 0 | 0 | 0 | 0 |
| C.I. Acid Brown 298 | 0 | 0 | 0 | 0 | 0 | 0 | 0 |
| 1,1'-Binaphthalene -2,2'-diol | 0.0004 | 0.0004 | 0.0004 | 0.0004 | 0.0004 | 0.0004 | 0.0004 |
| Compound of formula (1-1) | 0.0002 | 0.0002 | 0.0002 | 0.0002 | 0.0002 | 0.0002 | 0.0002 |
| TEG | 0 | 0 | 0 | 0 | 0 | 0 | 0 |
| TEGMBE | 10 | 0 | 0 | 0 | 0 | 0 | 0 |

(continued)

| | Example | | | | | | |
|---|---|---|---|---|---|---|---|
| | 20 | 21 | 22 | 23 | 24 | 25 | 26 |
| 1-(2-hydroxyethyl) -2-pyrrolidone | 0 | 10 | 0 | 0 | 0 | 0 | 0 |
| Diethylene glycol | 0 | 0 | 10 | 0 | 0 | 0 | 0 |
| 1,3-Propanediol | 0 | 0 | 0 | 10 | 0 | 0 | 0 |
| 1,5-Pentanediol | 0 | 0 | 0 | 0 | 10 | 0 | 0 |
| 3-Methyl-1,3-butanediol | 0 | 0 | 0 | 0 | 0 | 10 | 0 |
| 3-Methyl-1,5-pentanediol | 0 | 0 | 0 | 0 | 0 | 0 | 10 |
| Urea | 5 | 5 | 5 | 5 | 5 | 5 | 5 |
| Surfynol 465 | 0.2 | 0.2 | 0.2 | 0.2 | 0.2 | 0.2 | 0.2 |
| Proxel XL2 | 0.1 | 0.1 | 0.1 | 0.1 | 0.1 | 0.1 | 0.1 |
| TEA | 0.5 | 0.5 | 0.5 | 0.5 | 0.5 | 0.5 | 0.5 |
| 2Py | 4 | 4 | 4 | 4 | 4 | 4 | 4 |
| Gly | 8 | 8 | 8 | 8 | 8 | 8 | 8 |
| Water | Balance | Balance | Balance | Balance | Balance | Balance | Balance |
| Total | 100 | 100 | 100 | 100 | 100 | 100 | 100 |

[Table 9]

| | Comparative Example | | |
|---|---|---|---|
| | 4 | 5 | 6 |
| C.I. Acid Blue 193 | 5 | 0 | 0 |
| C.I. Acid Black 172 | 0 | 5 | 0 |
| C.I. Acid Brown 298 | 0 | 0 | 5 |
| 1,1'-Binaphthalene -2,2'-diol | 0 | 0 | 0 |
| Compound of formula (1-1) | 0 | 0 | 0 |
| TEG | 5 | 5 | 5 |
| TEGMBE | 10 | 10 | 10 |
| Urea | 5 | 5 | 5 |
| Surfynol 465 | 0.2 | 0.2 | 0.2 |
| Proxel XL2 | 0.1 | 0.1 | 0.1 |
| TEA | 0.5 | 0.5 | 0.5 |
| 2Py | 4 | 4 | 4 |
| Gly | 8 | 8 | 8 |
| Water | Balance | Balance | Balance |
| Total | 100 | 100 | 100 |

<Evaluation>

Drought resistance and resolubility evaluation tests were conducted in the same manner as in Example 1 etc. using each of the inks prepared as described above. Further, each ink was used to conduct the following evaluation

tests. The results are shown in the following Tables 10 to 12. The inks of Examples 11 to 26 all had good filterability when the entire amount thereof was filtered through a mixed cellulose filter with a diameter of 47 mm and a pore size of 0.2 μm (produced by Advantec Co., Ltd.), and foreign matter and coloring hardly remained on the filter. Further, for all of the inks of Examples 11 to 26, when the nozzle check pattern was printed with an inkjet printer PX-205 (produced by Seiko Epson Corporation), there were few defects in the print, and a good print could be obtained.

[Evaluation of Light Resistance of Dyed Fabric]

A pretreatment liquid containing guar (2 parts by mass), ammonium sulfate (2 parts by mass), urea (5 parts by mass), and water (91 parts by mass) was prepared, and silk fabric (Habutae) was pretreated by the padding method. Specifically, the silk fabric was impregnated with the pretreatment liquid, and the excess liquid was squeezed off with a rubber roller, followed by drying at 60°C. A container filled with each ink was loaded into an inkjet printer PX-205 (produced by Seiko Epson Corporation), and a solid pattern was inkjet printed in 100% gradation on the pretreated silk fabric to obtain printed matters. Then, each printed matter was pre-dried at 60 to 80°C and then steamed for 30 minutes with a relative humidity of 90% or more at 100 to 103°C. The obtained printed matters were each washed with cold water for 5 minutes and then dried, thereby obtaining test dyed fabrics.

The test dyed fabrics obtained as described above were each subjected to a light resistance test according to JIS L0843 A method. Specifically, using a xenon weather meter SUGA NX75 (produced by Suga Test Instruments Co., Ltd.), each test dyed fabric was irradiated with light for 39.4 hours. The light irradiation conditions were as follows: black panel temperature: 63°C, chamber temperature: 38°C, relative humidity: 50%, irradiance: 50 W/m$^2$ (wavelength: 300 to 400 nm), inner filter: quartz, outer filter: soda lime glass. The color of each test dyed fabric before and after the test was measured using a colorimeter (SpectroEye, produced by GretagMacbeth), and the color difference (ΔE) was calculated according to the following formula (1). In formula (1), ΔL*, Δa*, and Δb* mean the difference in L*, a*, and b* before and after the test, respectively.

$$\Delta E = [(\Delta L^*)^2+(\Delta a^*)^2+(\Delta b^*)^2]^{1/2} \quad ... \quad (1)$$

Then, based on the calculated color difference (ΔE), the light resistance was evaluated according to the following criteria.

-Evaluation criteria-

A: a ΔE of less than 1.2
B: a ΔE of 1.2 or more and less than 1.6
C: a ΔE of 1.6 or more and less than 1.9
D: a ΔE of 1.9 or more

[Evaluation of Light Resistance and Ozone Resistance of Photo Paper]

A container filled with each ink was loaded into an inkjet printer PX-205 (produced by Seiko Epson Corporation), and solid printing was performed on photo paper (produced by Seiko Epson Corporation) to obtain recorded matters. A light resistance test and an ozone resistance test were conducted using the obtained recorded matters as test pieces.

As the light resistance test, using a xenon weather meter XL75 (produced by Suga Test Instruments Co., Ltd.), each test piece was irradiated with light for 50 hours. The light irradiation conditions were as follows: chamber temperature: 24°C, relative humidity: 60%, irradiance: 0.36 W/m$^2$. The reflection density (Dc or Dk) before and after the test was measured in the range of 0.70 to 0.85 using a colorimeter (SpectroEye, produced by GretagMacbeth), and the coloring matter retention rate was calculated according to the following formula (2):

$$\text{Coloring matter retention rate} = (\text{reflection density after test}/\text{reflection density before test}) \times 100(\%) \quad ... \quad (2)$$

Then, the light resistance was evaluated from the calculated coloring matter retention rate according to the following criteria.

-Evaluation criteria-

A: A coloring matter retention rate of 90% or more
B: A coloring matter retention rate of 80% or more and less than 90%
C: A coloring matter retention rate of 70% or more and less than 80%
D: A coloring matter retention rate of less than 70%

As the ozone resistance test, using an ozone weather meter OMS-H (produced by Suga Test Instruments Co., Ltd.), each test piece was left for 16 hours at an ozone concentration of 1 ppm at a chamber temperature of 23°C with a relative humidity of 50%. Then, the residual coloring matter in each test piece was visually confirmed, and the ozone resistance was evaluated according to the following criteria.

-Evaluation criteria-

a: The original coloring matter clearly remains.

b: The original coloring matter slightly remains.

c: The original coloring matter cannot be confirmed.

[Table 10]

| | Example | | | | | | | |
|---|---|---|---|---|---|---|---|---|
| | 11 | 12 | 13 | 14 | 15 | 16 | 17 | 18 |
| Drought resistance | A | A | B | B | B | B | B | B |
| Resolubility | A | A | C | B | B | B | C | B |
| Light resistance of dyed fabric | C | C | B | C | A | C | C | A |
| Light resistance of photo paper | A | A | B | B | B | B | B | B |
| Ozone resistance of photo paper | a | a | b | b | b | b | b | b |

[Table 11]

| | Example | | | | | | | |
|---|---|---|---|---|---|---|---|---|
| | 19 | 20 | 21 | 22 | 23 | 24 | 25 | 26 |
| Drought resistance | B | B | B | B | B | B | B | B |
| Resolubility | C | B | B | B | B | B | B | B |
| Light resistance of dyed fabric | C | A | A | A | A | A | A | A |
| Light resistance of photo paper | C | B | B | B | B | B | B | B |
| Ozone resistance of photo paper | b | b | b | b | b | b | b | b |

[Table 12]

| | Comparative Example | | |
|---|---|---|---|
| | 4 | 5 | 6 |
| Drought resistance | B | B | B |

(continued)

| | Comparative Example | | |
|---|---|---|---|
| | 4 | 5 | 6 |
| Resolubility | D | D | D |
| Light resistance of dyed fabric | D | D | D |
| Light resistance of photo paper | D | D | D |
| Ozone resistance of photo paper | c | c | c |

As shown in Tables 10 to 12, the inks of Examples 11 to 26, which contained a naphthalene-based compound and/or a pyrazine-based compound, all had both practical drought resistance and resolubility, suggesting that they are excellent in preventing and resolving printer head nozzle clogging. The inks of Examples 11 to 26 were also excellent in filterability and ink ejection. Further, the recording media (silk fabric, photo paper) colored with the inks of Examples 11 to 26 had improved light resistance and ozone resistance. Even when 6,6-nylon was dyed in place of the silk fabric (Habutae), the obtained dyed fabric had excellent light resistance.

## Claims

1. A colored liquid comprising:

   a coloring matter having a naphthalene skeleton in its molecule,
   at least one compound selected from

      a compound having two or more naphthalene skeletons in its molecule, excluding the coloring matter having a naphthalene skeleton in its molecule and a compound having a pyrazine skeleton in its molecule, and
      a compound having a pyrazine skeleton in its molecule, excluding the coloring matter having a naphthalene skeleton in its molecule, and

   water.

2. The colored liquid according to claim 1, wherein the compound having two or more naphthalene skeletons in its molecule is a compound having a hydroxy group in its molecule.

3. The colored liquid according to claim 1 or 2, wherein the compound having two or more naphthalene skeletons in its molecule is a compound having a binaphthalene skeleton with a substituent.

4. The colored liquid according to any one of claims 1 to 3, wherein the compound having two or more naphthalene skeletons in its molecule is 1,1'-binaphthalene-2,2'-diol.

5. The colored liquid according to any one of claims 1 to 4, wherein the compound having a pyrazine skeleton in its molecule is a compound represented by the following formula (1) :

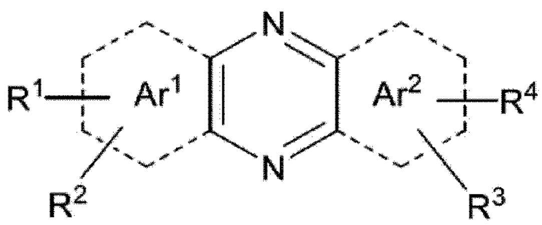

(1)

   wherein ring $Ar^1$ and ring $Ar^2$ represented by broken lines each independently represent a benzene ring or a naphthalene ring;
   $R^1$ and $R^2$ represent substituents of ring $Ar^1$, and $R^3$ and $R^4$ represent substituents of ring $Ar^2$;

$R^1$, $R^2$, $R^3$, and $R^4$ each independently represent a hydrogen atom, a hydroxy group, a carboxy group, a halogeno group, an alkyl group, a phenyl group, a phenoxy group, a naphthyl group, a hydroxynaphthyl group, a naphthoxy group, an amino group, a nitro group, a sulfo group, a sulfamoyl group, an acetyl group, an acetamide group, a methylamino group, an ethylamino group, a cyano group, a methoxycarbonyl group, an ethoxycarbonyl group, a 3-methoxy-2-hydroxypropylamino group, a phenylamino group, a methoxyamino group, a hydroxyethylamino group, a hydroxypropylamino group, an N-acetyl-N-methylamino group, or an acetoxyethoxyethylamino group.

**6.** The colored liquid according to any one of claims 1 to 5, wherein the compound having a pyrazine skeleton in its molecule is a compound represented by the following formula (1-1):

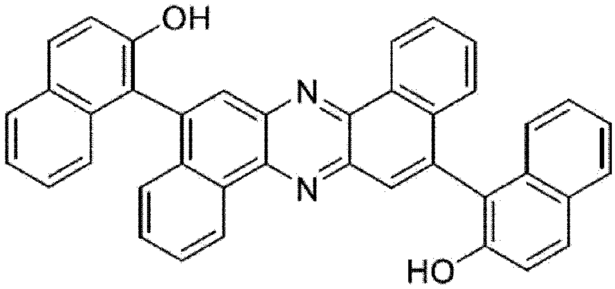

(1-1)

**7.** The colored liquid according to any one of claims 1 to 6, wherein the coloring matter having a naphthalene skeleton in its molecule is an azo-based coloring matter having an azo bond in its molecule.

**8.** The colored liquid according to any one of claims 1 to 7, wherein the coloring matter having a naphthalene skeleton in its molecule is an azo metal complex-based coloring matter.

**9.** The colored liquid according to claim 8, wherein the azo metal complex-based coloring matter comprises a metal selected from the group consisting of chromium, copper, iron, and cobalt.

**10.** The colored liquid according to any one of claims 1 to 9, wherein when a content of the coloring matter having a naphthalene skeleton in its molecule is taken as 100 parts by mass, a content of the compound having two or more naphthalene skeletons in its molecule is less than 1.8 parts by mass.

**11.** The colored liquid according to any one of claims 1 to 10, wherein when the content of the coloring matter having a naphthalene skeleton in its molecule is taken as 100 parts by mass, a content of the compound having a pyrazine skeleton in its molecule is less than 1.2 parts by mass.

**12.** The colored liquid according to any one of claims 1 to 11, wherein the coloring matter having a naphthalene skeleton in its molecule is at least one coloring matter selected from the group consisting of C.I. Acid Brown 298; C.I. Acid Blue 193; and C.I. Acid Black 52, 52:1, 172, and 194,

the compound having two or more naphthalene skeletons in its molecule is 1,1'-binaphthalene-2,2'-diol, and the compound having a pyrazine skeleton in its molecule is a compound represented by the following formula (1-1):

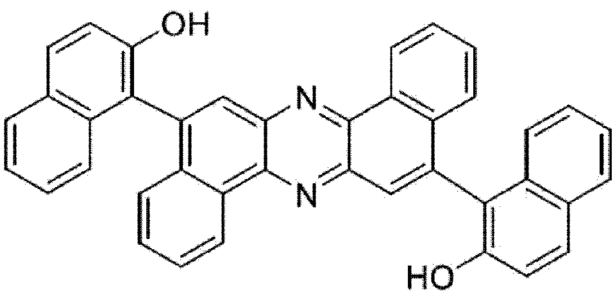

(1-1)

**13.** The colored liquid according to any one of claims 1 to 12, which comprises both the compound having two or more

naphthalene skeletons in its molecule and the compound having a pyrazine skeleton in its molecule.

**14.** The colored liquid according to any one of claims 1 to 13, further comprising a water-soluble organic solvent.

**15.** A colored liquid set comprising the colored liquid according to any one of claims 1 to 14, and at least one colored liquid having a hue different from that of the colored liquid according to any one of claims 1 to 14.

**16.** A recording medium to which the colored liquid according to any one of claims 1 to 14 or each colored liquid included in the colored liquid set according to claim 15 is attached.

**17.** The recording medium according to claim 16, wherein the recording medium is a fiber.

**18.** A coloring method comprising performing coloring by attaching the colored liquid according to any one of claims 1 to 14 or each colored liquid included in the colored liquid set according to claim 15 to a recording medium.

## INTERNATIONAL SEARCH REPORT

International application No.
**PCT/JP2021/037655**

**A. CLASSIFICATION OF SUBJECT MATTER**

***C09B 29/03***(2006.01)i; ***C09B 29/30***(2006.01)i; ***C09B 31/10***(2006.01)i; ***C09B 31/147***(2006.01)i; ***C09B 35/04***(2006.01)i; ***C09D 11/02***(2014.01)i; ***C09D 11/322***(2014.01)i; ***B41M 5/00***(2006.01)i; ***D06P 1/06***(2006.01)i; ***C09B 67/20***(2006.01)i
FI: C09B29/30; C09B29/03; C09B35/04; C09D11/322; B41M5/00 120; B41M5/00 114; C09D11/02; C09B31/10; C09B31/147; D06P1/06; C09B67/20 K

According to International Patent Classification (IPC) or to both national classification and IPC

**B. FIELDS SEARCHED**

Minimum documentation searched (classification system followed by classification symbols)

C09B29/03; C09B29/30; C09B31/10; C09B31/147; C09B35/04; C09D11/02; C09D11/322; B41M5/00; D06P1/06; C09B67/20

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 105732404 A (HANGZHOU BAIHE CLARIANT PIGMENTS CO., LTD.) 06 July 2016 (2016-07-06)<br>claims, example 3 | 1, 3, 5-10-11, 14-18 |
| A | entire text | 2, 4, 12-13 |
| X | WO 98/42787 A1 (SEIKO EPSON CORPORATION) 01 October 1998 (1998-10-01)<br>claims, example F16, etc. | 1-4, 7-10, 14-18 |
| A | entire text | 5-6, 11-13 |
| X | JP 63-152670 A (UENO SEIYAKU OYO KENKYUSHO:KK) 25 June 1988 (1988-06-25)<br>claims, example 1(b), etc. | 1-8, 10-11, 14-18 |
| A | entire text | 9, 12-13 |
| X | JP 62-169862 A (SUMITOMO CHEM CO LTD) 27 July 1987 (1987-07-27)<br>claims, example 12, etc. | 1-8, 10-11, 14-18 |
| A | entire text | 9, 12-13 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 December 2021** | **11 January 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2021/037655**

**C. DOCUMENTS CONSIDERED TO BE RELEVANT**

| Category* | Citation of document, with indication, where appropriate, of the relevant passages | Relevant to claim No. |
|---|---|---|
| A | JP 2012-52030 A (SUMIKA COLOR KK) 15 March 2012 (2012-03-15)<br>entire text | 1-18 |
| A | FR 759210 A (I. G. FARBENINDUSTRIE AKTIENGESELLSCHAFT) 31 January 1934 (1934-01-31)<br>entire text | 1-18 |

Form PCT/ISA/210 (second sheet) (January 2015)

**INTERNATIONAL SEARCH REPORT**
**Information on patent family members**

International application No.
**PCT/JP2021/037655**

| Patent document cited in search report | Publication date (day/month/year) | Patent family member(s) | Publication date (day/month/year) |
|---|---|---|---|
| CN 105732404 A | 06 July 2016 | (Family: none) | |
| WO 98/42787 A1 | 01 October 1998 | US 6100315 A<br>claims, example F16<br>EP 909798 A1 | |
| JP 63-152670 A | 25 June 1988 | US 4804415 A<br>claims, example 1(b)<br>EP 259007 A1<br>KR 10-1988-0002954 A | |
| JP 62-169862 A | 27 July 1987 | (Family: none) | |
| JP 2012-52030 A | 15 March 2012 | (Family: none) | |
| FR 759210 A | 31 January 1934 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014185201 A


### Non-patent literature cited in the description


- **HIROSHI HORIGUCHI.** Synthetic Dye Overview. Sankyo Publishing Co., Ltd, 1969
- *Journal of Synthetic Organic Chemistry,* 1955, vol. 13 (4), 106
- *Journal of the Imaging Society of Japan,* 2002, vol. 41 (2), 182